# EUROPEAN PATENT APPLICATION

(11) **EP 1 647 216 A2**
(43) Date of publication of application: **19.04.2006**
(21) Application number: 05255993.7
(22) Date of filing: 26.09.2005
(51) Int. Cl.: A47J 37/12

(54) **Forming and cooking with controlled curtain spillage**

(30) Priority: 14.10.2004 US 965078
(71) Applicant: Heat and Control, Inc., Hayward, California 94545-1132 (US)
(72) Inventor: Caridis, Andrew A., San Carlos, California 94070 (US); Silvester, John M., Brisbane, Queensland 4122 (AU); Miller, Thomas J., Burlingame, California 94010 (US)
(74) Representative: Tillbrook, Christopher John

(57) **Abstract**

Sheeted or relatively thin uncooked food products are arrayed for reception upon a procession of curved molds being conveyed along a process path. Once received on the molds and moving therewith, the products are deluged from above with curtains of hot cooking oil and thereby take the shape of the molds while cooking. The food products are dismounted from the molds at the end of the process path and are moved to a subsequent treatment station.

## Description

### Background of the Invention

Fabricated snack food products such as potato chips, potato crisps, tacos, tostadas and the like were commonly formed and fried while captive between intermeshing, male and female, pairs of molds. The molds with the uncooked products captive therein were immersed in hot cooking oil. In this manner the products were compelled to take the shape of the molds while undergoing heat treatment or cooking. Systems that operate in this general manner were disclosed and claimed in the following US Patents owned by Heat and Control, Inc.: 6,467,401; 4,554,865 and 4,510,165. Notable for these systems were certain mechanical characteristics including the high costs of the molds, complexity of ensuring that the molds in operation mesh exactly, the need for precise timing of the incoming products with respect to the molds, high maintenance costs and a relatively poor product throughput to oil volume ratios in the systems.

In an alternative prior art system, "free-form" fabricated potato chips or crisps were cooked while retained between a flat, wire mesh conveyor belt and rows of concave, upward facing, single curve molds. The chips thus formed to the shape of the molds by the upward flow of cooking oil through the mesh of the flat belt and by buoyancy of the chips as they were cooked. Benefits of this prior art system were the reduction of complexity in the fryer design compared to the closed mold design and relatively low product throughput to oil volume ratios. Perceived limitation on this system included its suitability for only relatively shallow product shapes with a simple curvature. It was not suitable for compound curve shapes or for deeper shaped products such as tacos and the like. Further, loss of chip orientation or misalignment with respect to the molds while cooking produced misshapen chips and consequent chip rejects. Consistent chip orientation in the cooking process is especially important to enable assemblage of the chips for subsequent packaging. Double chips, partially uncooked, and misshapen "folds" or "long horn" chips are to be avoided in the desired high quality chip product.

Another observation on this prior art process was that at discharge cooked chips were, at times, seen to stick to the molds and fail to release via gravity and could, unless detected, re run through the cooker a second time producing an unacceptable product. A further observation was at discharge from the cooker the curved chip was oriented in the upward facing position and residual cooking oil would reside along the upper surface. Removal of this residual oil by a blast of air or steam was frequently necessary to produce a chip with the desired oil content.

Following discharge from the cooker and onto a take away conveyor the upward facing curved chip required a "flop over" step to enable the chips to "shingle" or nest for packaging. As many as 8 or 10 quality control persons were seen stationed at the discharge end of a high volume cooker to pluck away misshapen chips and to ensure the cooked chips maintained the desired orientation for seasoning and packaging.

Another alternative "free form" system was disclosed in US Pats. 6,067,899 and 6,558,724 by the inventors Andrew A. Caridis, et al., for cooking of a wide variety of food products as they were passed under one or more continuously flowing curtains of hot cooking oil. There the products were carried in situ on a conveyor belt extending beneath the flowing curtains of oil and thus were cooked. This system had a relatively favorable ratio of oil volume to product throughput and was mechanically much less complex than the systems discussed above. Thus it is an important objective of this invention to apply the flowing oil curtain technology to the forming, while cooking, of both simple and complex product shapes such as potato chips, potato crisps, and corm based products such as taco shells and tostada shells.

### Statements of Invention

Overall, the invention provides
a method of cooking and forming food product, without full mould enclosure or cooking oil submersion, comprising the steps of:
supplying food product to be formed and cooked in discrete flat pieces;
loading food product pieces upon respective open form surfaces;
moving loaded food product in a processing path between loading and unloading stations;
flowing hot cooking oil in a curtain over the food product until cooked by the over-flowed mass and heat of cooking oil in conformity with the underlying open form surface;
passing cooked and formed food product to the unloading station;
displacing food product from respective form surfaces, for onward action.

Similarly, the invention also provides
apparatus for cooking and forming food product without full mould enclosure or cooking oil submersion, comprising:
a conveyor between loading and unloading stations;
open form surfaces deployed upon the conveyor;
supply means for depositing upon open form surfaces discrete flat food pieces to be formed and cooked;
a cooking oil distribution station disposed above the open form surfaces with a weir flowing hot cooking oil in downward free-fall,
to form and cook food product upon the open form surfaces in conveyance from loading to unloading stations;
a pan arranged below the conveyor to catch for recirculation cooking oil dispensed from the distribution station;
unloading means for displacing product from open form surfaces for onward action.

### Summary of the Invention and Objects

In summary this invention includes a method of forming food products in the absence of male and female mold pairs while simultaneously cooking the product with flowing cooking oil in the absence of a cooking oil bath and includes the steps of providing a supply of flat, discrete pieces of uncooked food product and conveying them along a processing path; providing in said path a conveyor having an interlinked set of form surfaces; moving the pieces of food product unto the form surfaces while the conveyor in moving along the process path; providing above the conveyor a supply of cooking oil and flowing the oil downwardly in a curtain for enveloping the food product disposed upon the form surfaces such that the weight and kinetic energy of the oil flowing oil form the food product into the desired configuration while the enthalpy of the oil cooks it; and then removing the formed product from the form surfaces for transfer to a subsequent treatment.

The invention also resides in apparatus for the efficient forming and cooking of food products using cooking oil dispensed in controlled, overflow curtain spillage onto the products and includes an endless conveyor equipped with an interconnected set of mold bodies having form surfaces movable along a processing path between product loading and unloading stations; product loading means for applying flat formed discrete pieces of food products onto the form surfaces; cooking oil reservoirs arranged above the conveyor and having weirs over which oil in flows in a continuous curtain so as to heat the molds, form the products and cook the products residing on the form surfaces; a pan for catching cooking oil is provided with a drain coupled to an oil recirculation and reheating system serving to resupply the oil reservoirs and provisions for dismounting the cooked and formed products from the molds at the product unloading station.

An important object of the present invention is to provide a highly efficient system for simultaneously forming and cooking a variety of food products without their submergence in cooking oils or entrapment within molds.

Another object of the invention is to provide a method for forming while cooking either simple or complex shapes of food products, in a continuous process, such as taco shells, tostada shells and the like.

Yet another object is to provide improved apparatus to enable food product forming while cooking in a cascade or curtain of cooking oil, the apparatus assuring an improved ratio of cooking oil volume to product throughput.

Further objects and advantages of the invention will appear from a consideration of the illustrative drawings taken in connection with the following detailed description.

### Brief Description of the Drawings

Fig. 1 is a general flow chart showing the sequence of operations in preparing a fabricated snack food product of complex shape starting from the dough mixing through to the packaging operation;

Fig. 2 is a schematic view in elevation of the product input end of a fryer adapted to carry out the process and principles of the present invention;

Fig. 3 is a transverse, fragmentary sectional view taken along the lines 3-3 of Fig. 2 and depicting the overhead spillage of hot cooking oil onto the products supported by the molds;

Fig. 4 is a fragmentary longitudinal view of the product discharge end of the conveyor and depicting discharge of the cooked and formed products by means of a vacuum transfer conveyor;

Fig. 5 is a transverse sectional view taken along the lines 5-5 of Fig. 4;

Fig. 6 is another fragmentary longitudinal view of another form of conveyor included in the present invention and depicting the discharge of the cooked and formed products;

Fig. 7 is a transverse sectional view taken along the lines 7-7 of Fig.6 and depicting a two-part mold in the closed condition, while

Fig. 8 is a view like Fig. 7 but taken along the lines 8-8 of Fig. 6 and depicting a two-part mold in the open condition for releasing formed and cooked product from the mold;

Fig. 9 is a view like Fig. 6 but depicting another arrangement for the discharge of the products onto a conveyor belt for further treatment;

Fig. 10 is a view like Fig. 6 but depicting yet another arrangement for releasing and discharging the cooked and formed products from the molds;

Fig. 11 is a view like Fig. 6 but depicting still another arrangement for the handling the formed products with respect to the molds;

Fig. 12 is a transverse sectional view taken along the lines 12-12 in Fig. 11;

Fig. 13 is a perspective view of a group of double curvature or saddle shaped molds with curvilinear shaped product supported therein;

Fig. 14 is an elevation view of the molds of Fig. 13;

Fig. 15 is a perspective view of a group of inverted Vee shaped molds useful for forming and cooking tacos and the like from tortillas which are shown mounted on four of the molds; and

Figs. 16-18 are views respectively like those of Figs. 6-8 and depicting another form of two part mold with a medial finger element active to remove cooked product from the molds.

### Description of the Preferred Embodiments

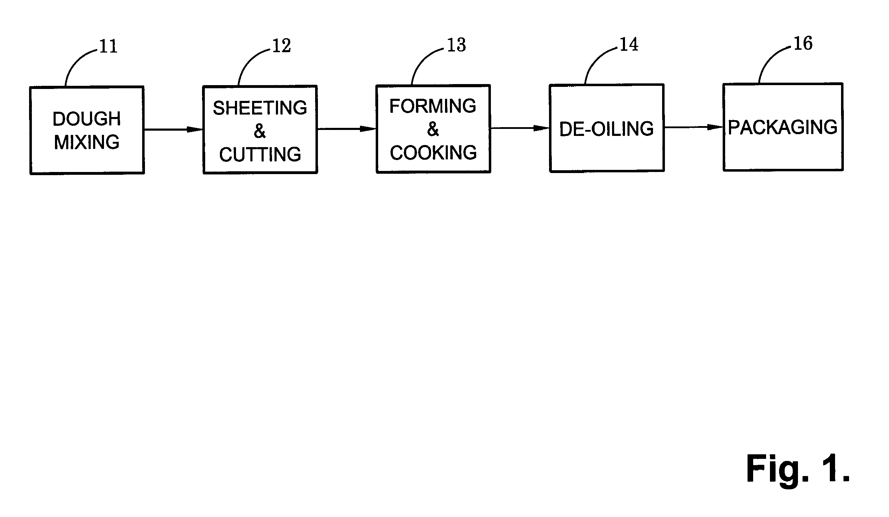

Referring to the drawings, there is shown in Fig. 1 a schematic diagram which enables the practice of the invention and includes dough and mixing stage 11, a sheeting and cutting stage 12, a forming and cooking stage 13, a product de-oiling stage 14 and a packaging or other final processing stage 16.

The dough mixing stage 11 is significant in that it has been found that the process of this invention is most successfully applied to "fabricated snack food products" such as potato chips or crisps and Mexican style snack foods made from a corn masa including shells for tacos, tostadas and similar items. To that end recipes well known in the field may be successfully adopted and adjusted as experience dictates so as to produce a potato dough or a corn masa, or a wheat based dough as the case may be. When the dough or masa has reached the desired consistency for the subsequent step of sheeting and cutting it is passed by conveyor (not shown) to stage 12, cutting and sheeting of the starting materials. On the other hand, the subject process and associated apparatus are well adapted to forming and cooking relatively thin starting materials such as sliced potatoes, plantains and apples. In such instances a slicing stage replaces the dough mixing stage 11.

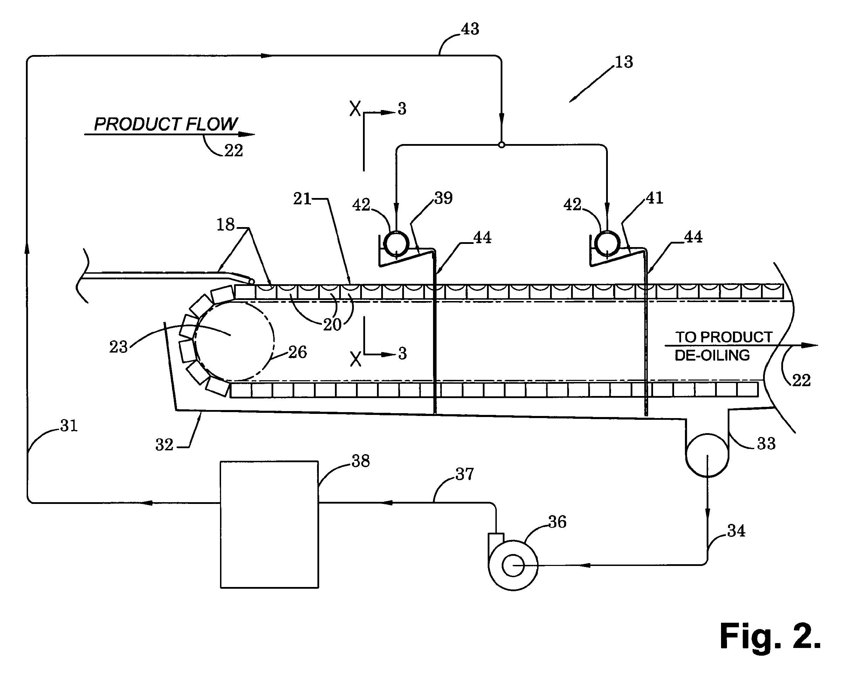

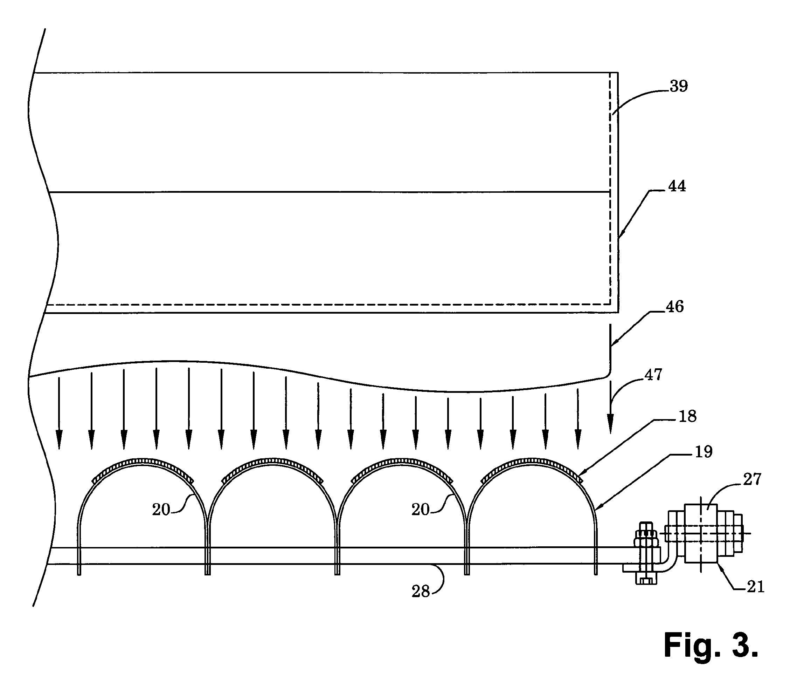

The sheeting and cutting stage 12 may employ known equipment such as the sheeter machines disclosed in Andrew A. Caridis, et al US Patents 5,626,898 and 5,580,583 assigned to Heat and Control, Inc. of Hayward, California, or such as conventional bakery sheeting and rolling machines having more than 2 rolls. There the dough or masa is sheeted, that is, formed or compressed in the nip between counter rotating pinch rolls to a desired thickness in the range of from about 0.025 inches to about 0.075 inches [0.635 mm. to about 1.905 mm.] or more as the product application dictates. As disclosed in the above mentioned patents, the sheeted material may be cut to a desired shape in the sheeter machine and then discharged, typically in aligned formation onto a conveyor belt 17, Fig. 2. The sheeted products are preferably cut in a generally circular shape to a diameter in the range of from about 2 inches to about 7.5 inches. Alternatively, other shapes may be adopted for the subject process by making appropriate adjustments to the sheeter-cutter 12 such as rectilinear (diamond, square, polygonal etc.) oval or elongate shapes. The desired finished shape of the formed and cooked product determines the selection of the flat pre-cooked product emanating from the sheeter and cutting stage 12 and delivered by the conveyor belt 17 to the forming and cooking stage 13, Fig. 2. By appropriate regulation of the speed of the conveyor belt 17 with respect to the delivery of product from the sheeter 12, the flat sheeted and cut products 18 will be arrayed on the conveyor belt 17 in rows with the individual pieces evenly spaced apart both laterally and longitudinally, with no overlap. This is to assure that the cut pieces 18 engage and ride upon the form surfaces 19 symmetrically with respect to an imaginary longitudinal plane passing through the high points of the form surfaces 19 as clearly shown in Fig. 3.

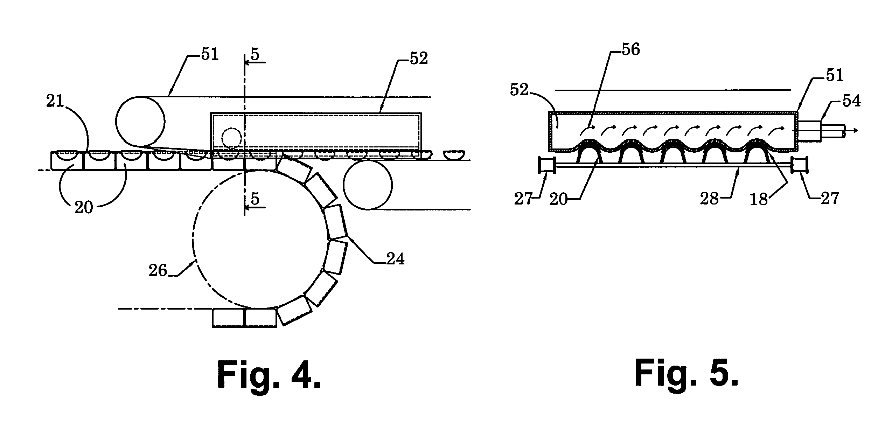

Referring more particularly to the forming and cooking stage 13 as illustrated in Figs. 2-4, and 15, the form surfaces 19 are the exterior surfaces of convex mold bodies 20 that are mounted upon an endless conveyor 21 powered to move in the direction of the arrow 22, Fig. 2, between a product input or loading station 23 to a product discharge station 24, Fig. 4. Shown in broken lines in Figs. 2 and 4 are the sprockets 26 conventionally provided in laterally spaced apart relationship for an endless conveyor 21. Reeved over the sprockets 26 are endless chains 27 having laterally extending cross rods 28 carried thereby as indicated in Figs, 3 and 5. The convex mold bodies 20 are mounted on the cross rods 28 coupled to the endless chains 27 as indicated in Fig. 3 and as so mounted in side-by-side relationship are equipped to individually pivot or rotate as the cross rods 28 carried by the chains traverse the sprockets 26 at the unloading station 24, clearly shown in Fig. 4. Thus the mold bodies 20 shift from a longitudinally aligned array in the horizontal portion of the conveyor top run to a segmented or opened or fanned configuration at the product discharge station 24. This articulation of the mold bodies on the endless conveyor enables easy removal of the cooked and formed products to be described in more detail below.

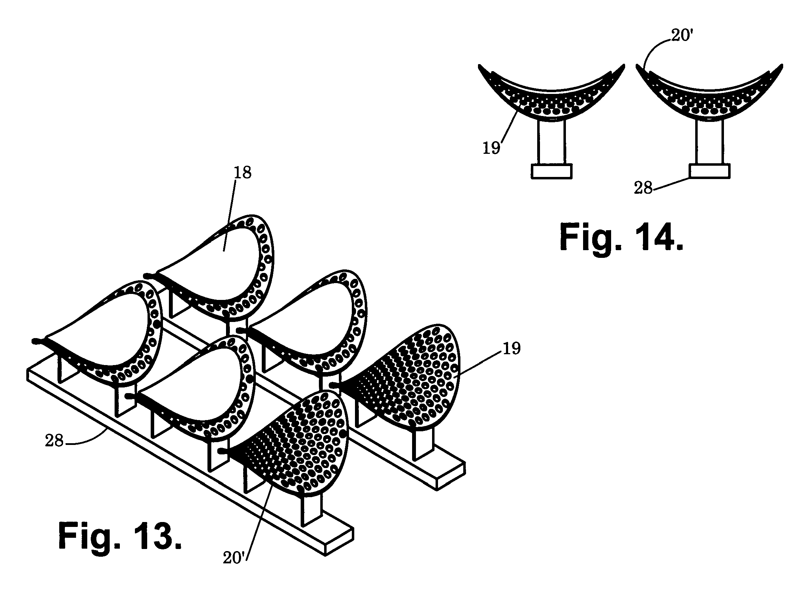

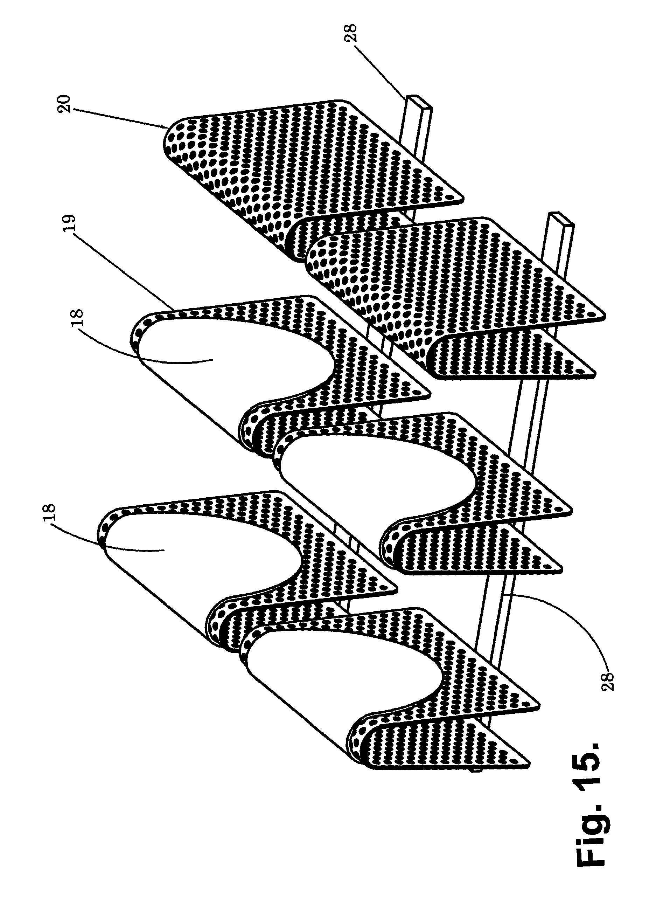

The number of mold bodies 20 mounted laterally on the cross rods 28 is a function of the overall design of the system and can vary from as few as 1 or 2 to as many as 22 or more, see for example Figs. 13 and 15. It will be understood that each mold body 20 provides the form surface 19 for carrying the product 18 during the cooking and forming operation. The form surface may be shaped to a single curvature as indicated in Figs. 3, 7 and 8 such as for an application to produce a formed potato chip. As illustrated in Figs. 13 and 14, the form surface 19 can also be shaped concave using a double curvature or saddle shaped mold body 20' (20 prime). This would serve as for an application to produce a saddle shaped product as is common to certain brands of fabricated potato chips. Considering now Fig. 15, in an application of the present invention to produce taco shells from tortillas, the mold bodies 20 are shaped to a convex Vee shape with a curved apex. Both the convex and concave mold bodies may be formed from smooth or rough or textured surfaced sheet metal or plastic material as indicated in Figs. 3 and 4, or from a perforated sheet metal or plastic material as shown in Figs. 13-15 or from a convex surfaced embossed metal or plastic material. When the metal or plastic mold body is perforated "inside out" the exterior form surfaces 19 have "tooth" that assists in maintaining the position of the product with respect to the mold during forming and cooking.

We disclosed in our US Patents Nos. 6,558,724 and 6,061,899, titled *"**Cooking by enrobing through controlled curtain spillage"*** systems for delivering hot cooking oil onto products carried on conveyor belts. This application carries forward the new use of certain principles shown in those patents.

More particularly and referring now to Figs. 2 and 3, a cooking oil heating, controlling and delivery system 31 is provided and includes a fryer pan 32 equipped with an oil sump 33 connected by a conduit 34 to a circulation pump 36 that in turn furnishes oil through a conduit 37 to a heat exchanger 38. Suitable controls (not shown but well known in the art) are included in the system 31 to set and maintain selected cooking oil temperatures and the volume of oil delivery within the system as well as the supplying of make up cooking oil as needed so that the oil volume, temperatures and oil delivery rate are all selectable for operational purposes of the system 31.

We prefer cooking with the cooking oil at temperatures within the range of about 290 ° to about 390 °F [143° to 199° Celsius] depending upon the product type or configuration and the cook time. We have also found it desirable to pre heat the mold bodies 20 to approximately oil operational temperatures prior to loading products 18 on the mold bodies 20. This step lessens product sticking and facilitates the easy removal of the cooked and formed products 18' from the mold bodies.

Shown in Fig. 2 are two exemplary oil reservoirs 39 and 41 mounted above the top run of the conveyor 21. Each reservoir is equipped with a manifold 42, both being supplied with cooking oil at a controllable rate from the heat exchanger 38 through conduits 43. The reservoirs 39, 41 are each configured to include a discharge weir or lip 44 over which oil spills in a smooth downward flowing curtain onto the mold bodies 20. With the object of minimizing turbulence developing in the reservoirs 39, 41, the manifolds 42 are equipped for discharge of cooking oil below the weirs 44 as well as below the nominal oil level in the reservoirs. Suitable oil delivery apertures (not shown) are provided on the manifold bottom walls for this purpose. With this configuration of reservoir and weir, as well as from the control of oil flow in the system 31, cooking oil flows in a smooth curtain 46 downwardly as indicated by the arrows 47 unto the food products 18, Fig. 3.

We prefer the oil free fall a distance from the weir lip to the product to be in the range of about 0.5 inches to about 4 inches [12.7 mm. to about 101.6 mm]. Further the cooking times, that is the time the products are first mounted on the form surfaces to the moment of their discharge at the unloading station 24, to be in the range of about 15 seconds to about 90 seconds. We believe it desirable in certain particular applications to have several reservoirs beyond the two exemplary reservoirs 39, 41 illustrated in Fig. 2.

Referring to Figs. 4 and 5, there is provided at or near the product unloading station 24 vacuum assist means 51 to assist smooth product release and removal from the molds 20. This includes an enclosure 52 arranged over and through which the rows of mold bodies 20 traverse . The bottom 53 of the enclosure is provided with an array of openings and the enclosure 52 is coupled to an air suction or vacuum line 54 so as to enable air movement, as indicated by the arrows 56 in Fig. 5, to lift the product upwardly to release from the molds.

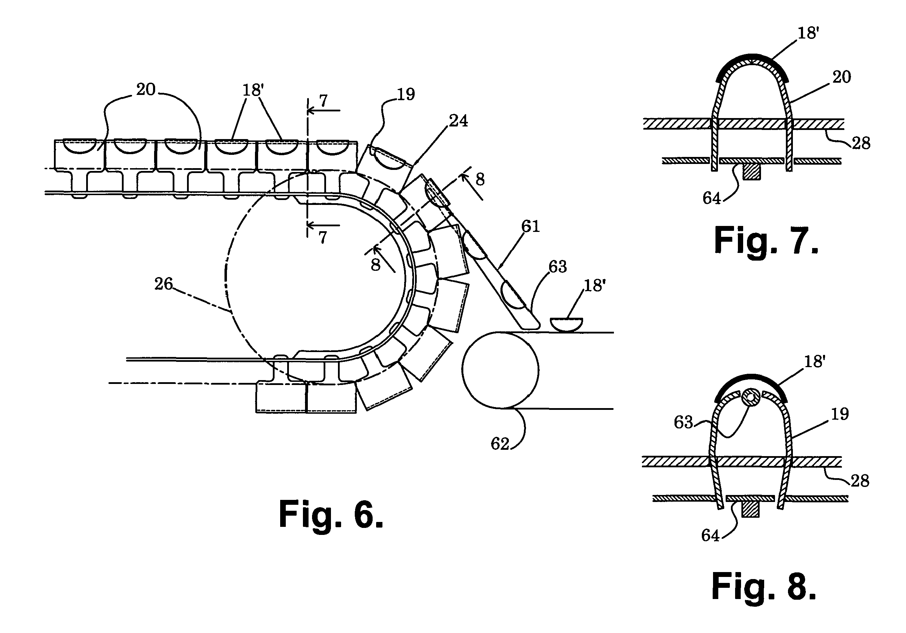

Alternatively, the unloading station 24, where the formed and cooked products18' are dismounted from the form surfaces 19 of the mold bodies 20, is equipped with means 61 to insure the transition of the cooked products 18' onto a take away conveyor 62 as shown in Figs. 6-12. Although the formed and cooked products 18' may readily dislodge passively as by gravity from the form surfaces 19 as the mold bodies 20 traverse the discharge end sprocket 26 of the conveyor 21, positive dismounting means may be provided to prevent any products from sticking to the mold bodies and failing to dislodge unto the conveyor 62. In one embodiment the mold bodies 20 are split into mold halves along their longitudinal center lines, Figs. 7 and 8. At the interval when the conveyor carries the molds over the conveyor sprocket 26 the split mold sections are caused to shift from the closed condition shown in Fig. 7 to an open or expanded condition as shown in Fig. 8, thereby dislodging the product 18' from the mold body as shown in Fig. 6. An inclined, convex guide chute or a guide rod 63 is mounted as shown in Fig. 6 so as to receive the formed product and guide it downwardly unto the take away conveyor 62. As shown in Fig. 8, a centrally disposed cam member or guide rails 64 arranged at the base of the convex split mold body serves to urge the body halves to shift into the open condition for product dismounting.

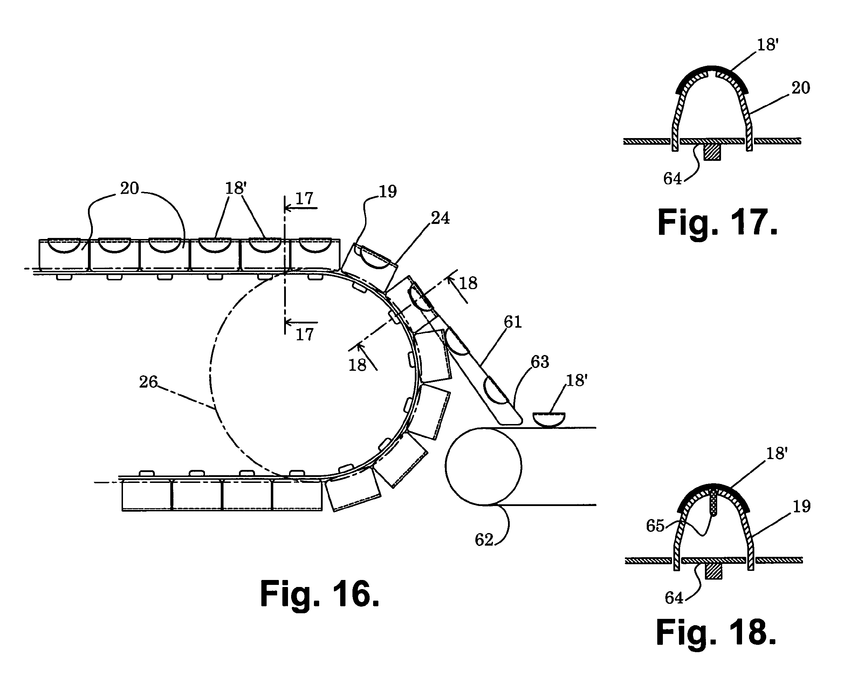

Referring now to Figs. 16-18, split molds 20 are configured in the medial section for penetration by a fixed, finger like element 65 that serves positively to dislodge the product 18' from the mold surface 19 as the molds are carried around the sprocket at the discharge station..

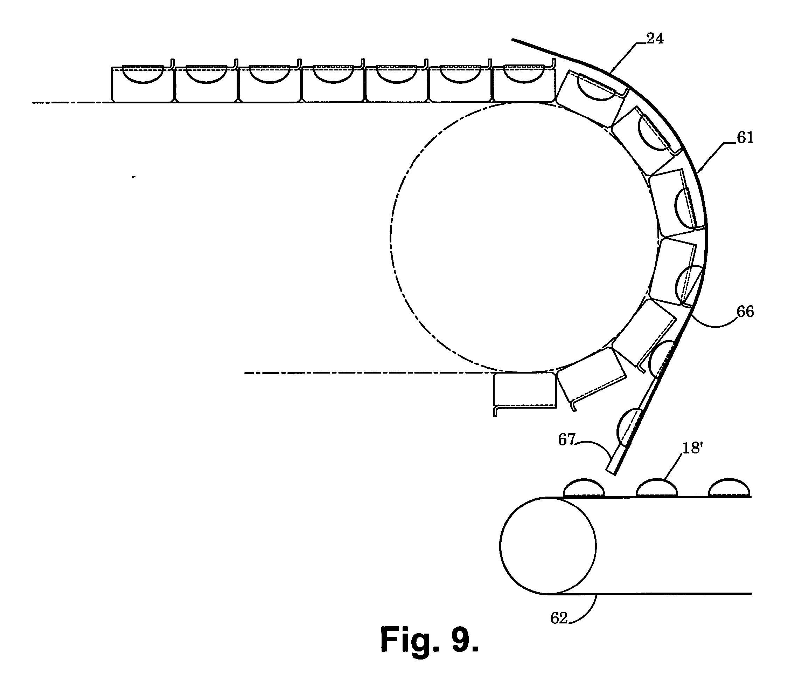

Referring now to Fig. 9, in another embodiment of the means 61 assisting removal of the product from the molds, a curvilinear guide panel 66 having an end guide 67 is positioned outwardly of the mold bodies 20 in the 1 o'clock to 5 o'clock travel segment of the mold bodies on the conveyor sprocket 26. In operation the formed products 18' fall gravitationally from the mold bodies 20, slide a distance along the guide panel 66 and are intercepted and controlled so as to maintain alignment by the end guide 67 before dropping a short distance onto the conveyor 62. This arrangement encourages a smooth transition of the formed products 18' from the conveyor 21 to the conveyor 62 in a manner that minimizes product crumbling, cracking, breakage and misalignment. Then the cooked and formed products 18' are moved on the conveyor 62 to the packaging stage 16 or for other treatment.

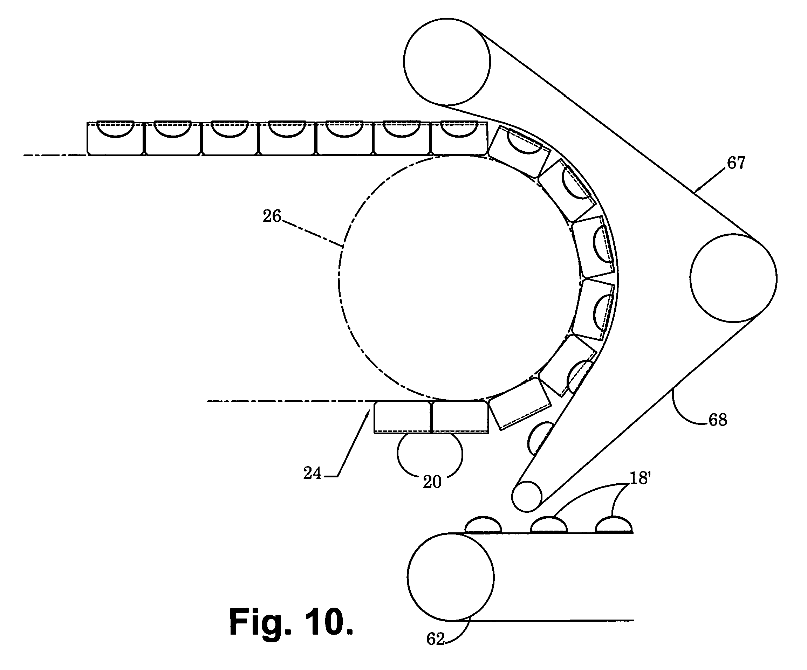

Referring now to Fig. 10, still another embodiment of the discharge means 61 is provided and comprises an endless conveyor 67 having a smooth, soft surfaced belt 68. The conveyor is mounted at the product unloading station 24 in a manner such that the conveyor belt 68 that engages and wraps outwardly of the formed products 18' on the mold bodies 20 over a distance covering an angle of about 120 degrees of arc of the sprocket thus maintaining the products on the form surfaces until they separate gravitationally and fall a short distance onto the conveyor 62. The cooked and formed products are then moved towards the packaging or other end processing stage 16.

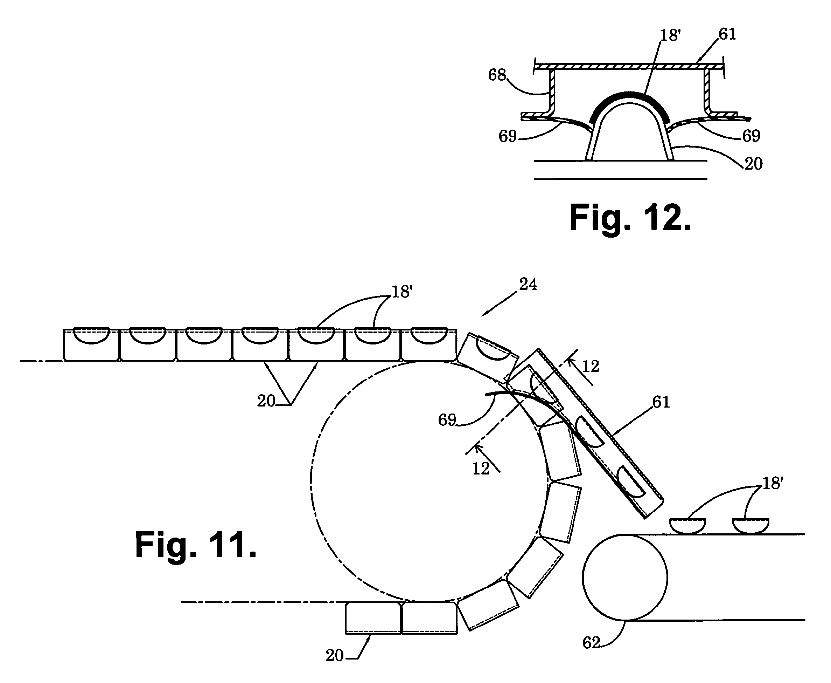

Referring now to Figs. 11 and 12, yet another embodiment of the discharge means is shown and includes a slide box 68. Flexible wipers 69 are provided as shown in Fig. 12 on the lower portions of the slide box 68 and positioned to encourage the formed products 18' to dislodge from the mold surfaces 20, as indicated in Fig. 11. The products then slide downwardly onto the take away conveyor 62 to be transported to the packaging stage 16 or other end processing steps.

For certain products after cooking and forming the removal of surface cooking oil can be desirable. This may be accomplished by the application to the products of a sweep of air or nitrogen and in certain cases steam. The apparatus for achieving this step is well known in the field and will not be duplicated here.

While there has been disclosed above and illustrated in the several drawings what is considered to be the preferred embodiments of the present invention so as to teach those skilled in the art the principles of the applicants' developments, the true scope of the inventions shall not be limited except as set out in the claims below.

## Claims

1. A method of cooking and forming food products without the use of enclosing molds or submergence in cooking oil, comprising the steps of providing a supply of flat, discrete products to be formed and cooked;
providing a cooking system including a conveyor having an interlinked set of form surfaces and operable along a processing path;
providing above said conveyor at least one facility for dispensing a downward flowing curtain of cooking oil over the form surfaces;
moving the discrete products onto the form surfaces at a product loading station;
flowing hot cooking oil in a curtain unto the products as they pass along the processing path for a sufficient period of time until the mass and heat of the cooking oil causes the products to cook and conform to the shape of the form surfaces;
passing the cooked products along said processing path to a product unloading station; causing the products to disengage from the form surfaces and
moving the thereby formed products to a subsequent station along the processing path.

2. The forming and cooking method of claim 1 including the step of de-oiling the surfaces of the cooked and formed products.

3. The forming and cooking method of claim 1 wherein the products are shaped into products of single radius curvature.

4. The forming and cooking method of claim 1 wherein the products are shaped into products of compound curvature.

5. The forming and cooking method of claim 1 and including the step of ejecting the products by mechanical means from the form surfaces at the product unloading station.

6. The forming and cooking method of claim 1 in which the products when initially supplied to the form surfaces are substantially flat and curvilinear shaped.

7. The method of claim 6 in which the products when supplied to the form surfaces have thickness in the range of about 0.025 inches to about 0.095 inches.

8. The method of claim 6 in which the products when supplied to the form surfaces have a diametral size in the range of from 2 to about 7.5 inches.

9. The method of claim 6 in which the supply of thin discrete products are cut from a sheeted dough having potato or corn constituents and the cooked products are potato chips and potato crisps.

10. The method of claim 6 in which the supply of thin discrete products are cut from a sheeted corn based masa and the cooked products are taco shells.

11. The method of claim 1 in which the food products are formed and cooked from contact with the descending cooking oil maintained at a temperature within the range of about 290 ° to about 390 °F.

12. The method of claim 1 in the food products are formed and cooked for a time period within the range of about 15 to about 90 seconds.

13. The method of claim 1 wherein the cooking oil is in freefall flow toward the form surfaces for a distance in the range of about 0.50 inches to about 4 inches.

14. Apparatus for cooking and forming food products without the use of enclosing molds or submergence in cooking oil, the combination comprising:
an endless conveyor extending generally horizontally between a product loading station and a product unloading station;
said conveyor being equipped with mold bodies presenting at least one row of form surfaces extending toward said unloading station;
power means serving to drive said conveyor for continuously moving the mold bodies from said loading to said unloading station;
means for supplying unto the form surfaces a procession of food products in flat discrete pieces to be formed and cooked;
means comprising at least one cooking oil distribution station disposed above said mold bodies and including at least one weir serving to permit hot cooking oil to flow there from in downward freefall so as to form and cook the food products on the form surfaces as the conveyor carries such products from the loading to the unloading stations;
a pan arranged below said conveyor to catch for recirculation the cooking oil dispensed from the distribution station;
means for dismounting the cooked and formed food products from the mold bodies at said unloading station for further treatment.

15. The apparatus of claim 14 wherein said mold bodies include an upward facing, convex shaped form surfaces for receipt of the food products to be cooked, and while cooking, to adhere to the shape of the form surfaces.

16. The apparatus of claim 15 wherein said mold bodies include form surfaces having a curvature in a single plane lateral to the path of conveyor travel.

17. The apparatus of claim 15 wherein said mold bodies include form surfaces having curvatures in at least two planes.

18. The apparatus of claim 17 wherein said mold bodies include form surfaces in the shape of a saddle.

19. The apparatus of claim 14 wherein said means for dismounting the products from the mold bodies includes vacuum transfer means.

20. The apparatus of claim 14 wherein said means for dismounting the products from the mold bodies includes belt guide means serving to enwrap the mold bodies at said discharge station.

21. The apparatus of claim 14 wherein said means for dismounting the products from the mold bodies includes split mold bodies operable between a closed condition for product forming and cooking and an open condition for dismounting the formed and cooked product there from;
means serving to maintain the split mold bodies in the closed condition;
and means at said discharge station serving to shift the molds to an open condition for product dismount.

22. The apparatus of claim 14 wherein said means for dismounting the products from the mold bodies includes means for inverting the formed products and guide means spaced apart from the mound bodies serving to control dislodging of the products from the molds.

23. The apparatus of claim 22 wherein said guide means comprises continuous belt means proximate said molds.

24. The apparatus of claim 22 wherein said guide means comprises a chute positioned to permit the formed products to free fall from the molds and directing them onto a support surface.

25. A method of cooking and forming food product,
without full mould enclosure or cooking oil submersion, comprising the steps of:
supplying food product to be formed and cooked in discrete flat pieces;
loading food product pieces upon respective open form surfaces;
moving loaded food product in a processing path between loading and unloading stations;
flowing hot cooking oil in a curtain over the food product until cooked by the over-flowed mass and heat of cooking oil in conformity with the underlying open form surface;
passing cooked and formed food product to the unloading station;
displacing food product from respective form surfaces, for onward action.

26. Apparatus for cooking and forming food product
without full mould enclosure or cooking oil submersion, comprising:
a conveyor between loading and unloading stations;
open form surfaces deployed upon the conveyor;
supply means for depositing upon open form surfaces discrete flat food pieces to be formed and cooked;
a cooking oil distribution station disposed above the open form surfaces with a weir flowing hot cooking oil in downward free-fall, to form and cook food product upon the open form surfaces
in conveyance from loading to unloading stations;
a pan arranged below the conveyor to catch for recirculation cooking oil dispensed from the distribution station;
unloading means for displacing product from open form surfaces for onward action.
